# EUROPEAN PATENT SPECIFICATION

(11) **EP 3 498 001 B1**
(45) Date of publication and mention of the grant of the patent: **27.01.2021**
(21) Application number: 17736783.6
(22) Date of filing: 29.06.2017
(51) Int. Cl.: H04W 72/04

(54) **METHODS AND APPARATUSES FOR SETTING UP A SECONDARY UPLINK CARRIER IN A COMMUNICATIONS NETWORK**
VERFAHREN UND VORRICHTUNGEN ZUR EINRICHTUNG EINES SEKUNDÄREN UPLINK-TRÄGERS IN EINEM KOMMUNIKATIONSNETZ
PROCÉDÉS ET APPAREILS D'ÉTABLISSEMENT D'UNE PORTEUSE DE LIAISON MONTANTE SECONDAIRE DANS UN RÉSEAU DE COMMUNICATION

(30) Priority: 12.08.2016 US 201662374105 P
(43) Date of publication of application: 19.06.2019
(73) Proprietor: Telefonaktiebolaget LM Ericsson (Publ), 164 83 Stockholm (SE)
(72) Inventor: SHI, Nianshan, 176 74 Järfälla (SE); ISRAELSSON, Martin, 163 41 Spanga (SE)
(74) Representative: Zacco Sweden AB
(86) International application number: PCT/SE2017/050723
(87) International publication number: WO 2018/030934

(56) References cited:
- EP-A1- 2 753 137
- HUAWEI ET AL: "TP on enhanced TTI switching in MC enhancements", 3GPP DRAFT; R2-163751 TP ON ENHANCED TTI SWITCHING IN MC ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Nanjing, China; 20160523 - 20160527 22 May 2016 (2016-05-22), XP051105162, Retrieved from the Internet: URL:http://www.3gpp.org/ftp/Meetings_3GPP_ SYNC/RAN2/Docs/ [retrieved on 2016-05-22]
- HUAWEI ET AL: "TP on solutions for MC enhancements", 3GPP DRAFT; R2-164350 TP ON SOLUTIONS FOR MC ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 6 June 2016 (2016-06-06), XP051112617, Retrieved from the Internet: URL:http://www.3gpp.org/ftp/tsg_ran/WG2_RL 2/TSGR2_94/Docs/ [retrieved on 2016-06-06]
- "3rd Generation Partnership Project; Technical Specification Group Radio Access Network; Multi-Carrier Enhancements for UMTS (Release 14)", 3GPP STANDARD; 3GPP TR 25.707, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V14.0.0, 1 July 2016 (2016-07-01), pages 1-44, XP051295299, [retrieved on 2016-07-01]

## Description

### BACKGROUND

In a typical wireless communication network, wireless devices, also known as wireless communication devices, mobile stations, stations (STA) and/or user equipments (UE), communicate via a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a "NodeB" or "eNodeB". A service area or cell area is a geographical area where radio coverage is provided by the radio network node. The radio network node communicates over an air interface operating on radio frequencies with the wireless device within range of the radio network node.

A Universal Mobile Telecommunications System (UMTS) is a third generation (3G) telecommunication network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network. The EPS comprises an Evolved Universal Terrestrial Radio Access Network (E-UTRAN), also known as Long Term Evolution (LTE) radio access network, and an Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface. EPS is the Evolved 3GPP Packet Switched Domain.

Transmission Time Interval (TTI) is a parameter in telecommunication networks related to encapsulation of data from higher layers into frames for transmission on a radio link layer. TTI refers to the duration of a transmission on the radio link. The TTI is related to the size of the data blocks passed from the higher network layers to the radio link layer.

A Work Item "Multi-Carrier Enhancements for UMTS" has been agreed upon in 3GPP Release 14. The work item relates to enhanced support for new Transmission Time Interval (TTI) configurations for Dual Cell - High Speed Uplink Packet Access (DC-HSUPA) and Dual Band - Dual Cell - High Speed Uplink Packet Access (DB-DC-HSUPA) scenarios. Data scheduling on multi-carrier has been deployed to achieve higher data rates and load balancing. With the introduction of intra/inter-band features like DB-DC-HSPA/DC-HSPA, downlink and uplink data can be scheduled across two carriers for 2ms TTI. However the uplink coverage of cells deployed in different carriers may be different and in some areas, especially at cell edges, the 2ms TTI cannot be configured. In the current specification, when it comes to DC-HSUPA for example, it is explicitly stated that "Only 2 ms TTI is supported". Hence, currently only 2ms TTI for both carriers is supported for DC-HSUPA and DB-DC-HSUPA operations.

In order to deploy multi-carrier features in these scenarios, longer TTI may be configured for multi-carrier deployments. Thereby longer TTI may be configured on one carrier or two carriers when DB-DC-HSUPA/DC-HSUPA is configured in order to obtain higher data rates.

However, since legacy network nodes only support the 2ms TTI, configuring a longer TTI for the one or more carriers will cause backwards non-compatibility problems.

HUAWEI ET AL: "TP on enhanced TTI switching in MC enhancements", 3GPP DRAFT; R2-163751, discusses, RRC procedure and TTI switching procedure for configuration of 10ms TTI in MC enhancements.

HUAWEI ET AL: "TP on solutions for MC enhancements", 3GPP DRAFT; R2-164350, discusses, updating RRC configuration procedures to support possible new types of DC-HSUPA combinations and updating RRC pre-configuration of TTI parameters for the enhanced TTI switching procedure.

3rd Generation Partnership Project; Technical Specification Group Radio Access Network; Multi-Carrier Enhancements for UMTS (Release 14), discusses considerations to minimize the impact on legacy terminals.

EP 2753137 discloses a method, base station and radio network controller for determining transmission time interval.

### SUMMARY

The present invention is set forth in the appended independent claims. Further examples of the invention are set forth in the dependent claims.

It is therefore an object of embodiments herein to improve the performance in a communications network while ensuring backwards compatibility for legacy network nodes.

Thereby the backwards non-compatibility issue caused by the introduction of the Release 14 new TTI configuration in DC-HSUPA/DB-DC-HSUPA in the secondary E-DCH carrier can be overcome.

### BRIEF DESCRIPTION OF THE DRAWINGS

Examples of embodiments herein are described in more detail with reference to attached drawings in which:
- Figure 1: is a schematic block diagram illustrating embodiments of a wireless communications network,
- Figure 2: is a flowchart depicting embodiments of a method performed in an RNC,
- Figure 3: is a flowchart depicting embodiments of a method performed in a network node,
- Figure 4: is a flowchart depicting embodiments of a method,
- Figure 5: is a schematic block diagram illustrating embodiments of a radio network node,
- Figure 6: is a schematic block diagram illustrating embodiments of RNC.

### DETAILED DESCRIPTION

As part of developing embodiments, a problem will first be identified and discussed. Please note that the terms "UE" and "user equipment" are used interchangeably in this document.

Today the secondary E-DCH can be setup with a Radio Link Setup procedure, or a Radio Link Reconfiguration procedure. TTI transmissions of 2ms are always used and are thus not explicitly communicated from an RNC, such as e.g. a Serving Radio Network Controller (SRNC) to a NodeB and/or a Drifting Radio Network Controller (DRNC). Depending on the current connection the RNC may take different roles. When the RNC has a Radio Resource Control (RRC) connection with a UE it is referred to as an SRNC. When the UE roams to a cell which is controlled by another RNC, then we end up having two RNCs, wherein the one having RRC is the SRNC. The RNC that is added later is referred to as a DRNC. The SRNC controls the DRNC which in turn controls the cells. When a secondary HSUPA carrier/ Additional E-DCH Cell is setup/added, there is no information about which TTI the carrier is going to use, since 2ms TTI is mandatory.

As the standard so far only supports that both the primary and the secondary E-DCH carriers are on 2ms TTI, there is no explicit Information Element (IE) when setting up the secondary E-DCH carrier to specify which TTI is used.

In the Release 14 Multi-Carrier Enhancements for UMTS feature, new possible TTI configurations, may be supported, such as e.g. 2ms TTI + 10 ms TTI, 10ms TTI + 10 ms TTI. This means that the secondary E-DCH carrier may be setup on 10ms TTI as well. Hence, a way to specify the TTI value for the secondary E-DCH carrier is thus needed.

A straightforward solution might be to add an optional IE to indicate the TTI value when the secondary E-DCH carrier is setup or configured. However this will cause a backwards non-compatibility problem because it makes the meaning of "the absence of such a TTI IE" ambiguous:
- Before Release 14, the IE does not exist, thus the absence of this IE means that 2ms TTI will be used;
- In Release 14 (when this feature is implemented), the absence of this IE means that the TTI value that was last communicated is not changed. This is due to the 3GPP design principle that over NBAP and RNSAP, when an optional IE is not included, it means that the value of this IE is not changed. So if the secondary E-DCH carrier is setup on a 10ms TTI, and in a new Radio Link Reconfiguration procedure, if the TTI value is not changed, the TTI IE is thus absence from the message. These would however mean that the TTI value is not changed and should hence be a 10ms TTI.

An object of embodiments herein is thus to provide a method for communicating a TTI value for a secondary carrier which improves the performance in a communications network and is compatible with legacy network nodes.

Embodiments herein may specify new TTI configurations: 2ms+10ms and 10ms+10ms TTI, for DC-HSUPA and DB-DC-HSUPA scenarios.

Embodiments herein may further specify support for the basic functionality, e.g. only support for RRC based (re)configuration.

According to the embodiments herein support for the new TTI configurations is provided. The new configurations are 2ms+10ms and 10ms+10ms TTI, for DC-HSUPA and DB-DC-HSUPA scenarios.

In the current specification, such as e.g. in 3GPP TS 25.319 v13.0.0, it is explicitly stated for DC-HSUPA that "Only 2 ms TTI is supported" for a carrier. Hence, only 2ms TTI for both carriers is supported for DC-HSUPA and DB-DC-HSUPA operations. When the secondary HSUPA carrier/ Additional E-DCH Cell is setup/added, an E-TTI IE is not included.

To allow the new configuration, a new first IE, which is also referred to as an E-TTI IE, is added.

In a first embodiment the E-TTI IE may be added in the related IE groups handling the Additional E-DCH Cell.

The Node B may or may not support all the configurations, hence a specific Node B support indication for each configuration may be used, in the cell capability.

In a second embodiment new cell capabilities may be added to indicate Node B support.

As the legacy Node B always considers to set up the secondary E-DCH on 2ms TTI, there may be ambiguity when E-TTI IE is not presented in the message during secondary E-DCH carrier reconfiguration. In order to resolve this ambiguity an abnormal case, also referred to as an abnormal condition, is also introduced herein. Embodiments herein provide a change to the NBAP/RNSAP 3GPP specification.

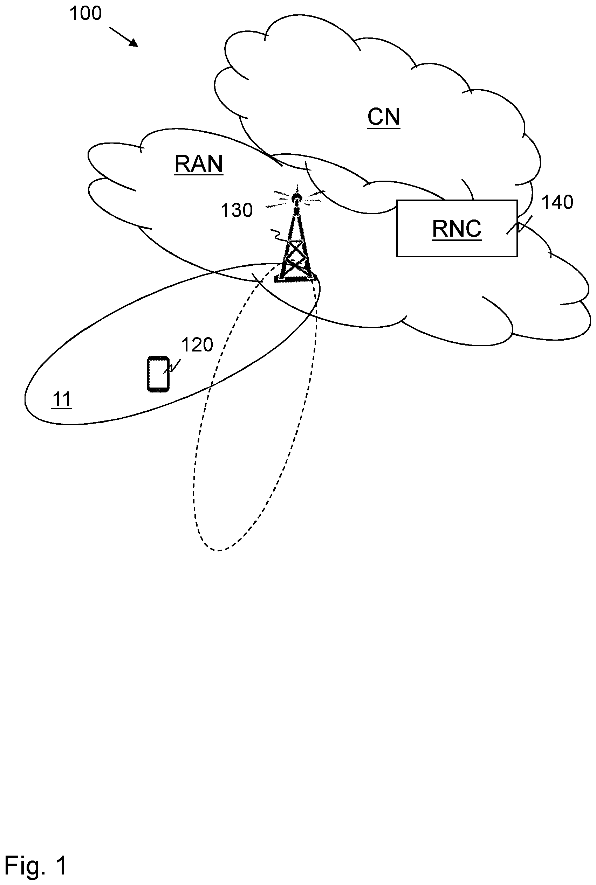

Embodiments herein relate to a communication networks in general. **Fig. 1** is a schematic overview depicting **a communication network 100.** The communication network 100 may be a wireless communications network comprising one or more RANs and one or more CNs. The communication network 100 may use a number of different technologies, such as Wi-Fi, Long Term Evolution (LTE), LTE-Advanced, 5G, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

In the wireless communication network 1, wireless devices e.g. **a wireless device 120** such as a mobile station, a non-access point (non-AP) STA, a STA, a user equipment (UE) and/or a wireless terminals, communicate via one or more Access Networks (AN), e.g. RAN, to one or more core networks (CN). It should be understood by the skilled in the art that "wireless device" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station communicating within a cell.

The wireless communication network 100 comprises a **network node 130** such as a radio network node providing radio coverage over a geographical area, **a service area 11**, which may also be referred to as a beam or a beam group where the group of beams is covering the service area of a first radio access technology (RAT), such as 5G, LTE, Wi-Fi or similar. The radio network node 130 may be a transmission and reception point e.g. a radio access network node such as a Wireless Local Area Network (WLAN) access point or an Access Point Station (AP STA), an access controller, a base station, e.g. a radio base station such as a NodeB, an evolved Node B (eNB, eNode B), a base transceiver station, a radio remote unit, an Access Point Base Station, a base station router, a transmission arrangement of a radio base station, a stand-alone access point or any other network unit capable of communicating with a wireless device within the service area served by the radio network node 130 depending e.g. on the first radio access technology and terminology used. The radio network node 130 may be referred to as a serving radio network node and communicates with the wireless device 120 with Downlink (DL) transmissions to the wireless device 10 and Uplink (UL) transmissions from the wireless device 120. The wireless communication network 100 further comprises a RNC 140 which may control a network node 130 when connected to it.

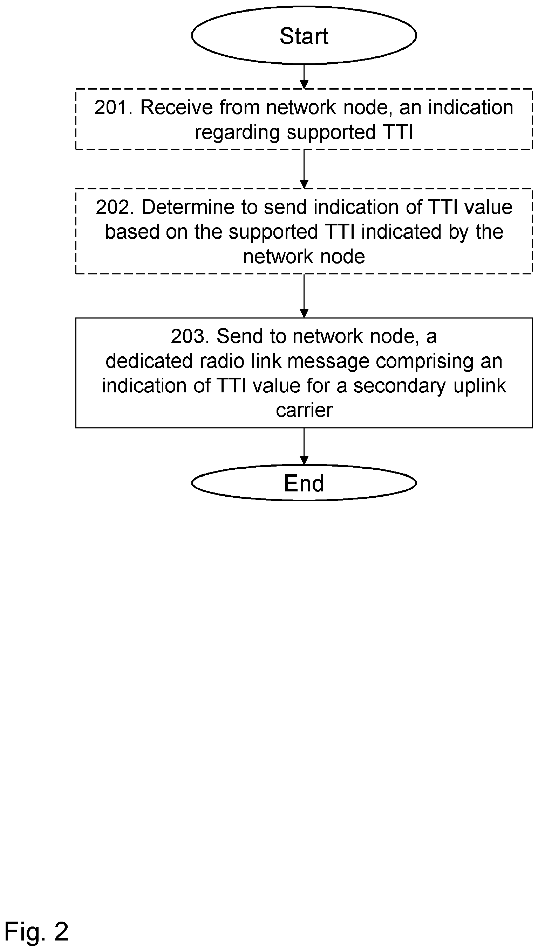

**Figure 2** discloses a flowchart depicting a method performed by the RNC 140, for setting up a secondary uplink carrier, such as e.g. a secondary Uplink Enhanced Dedicated Channel (E-DCH) carrier in a radio communications network. Actions performed in some embodiments only are marked with dashed boxes.

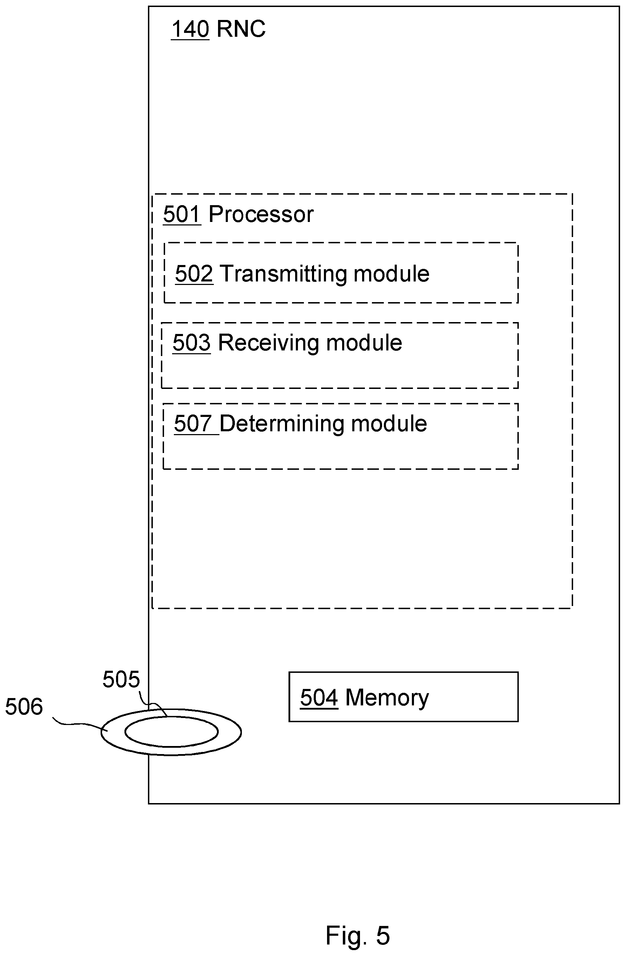

**Action 201:** The RNC 140 may receive an indication from the network node 130, wherein the indication indicates that the network node 130 supports a variable TTI for the secondary uplink carrier. This action corresponds with example embodiment B action 401 and example embodiment C step 1. The RNC may be configured to perform the action 201, e.g. by means of a receiving module configured to perform the action 201, see figure 5.

**Action 202:** The RNC 140 may determine to send an indication of a TTI value based on the supported TTI indicated by the network node 130. The RNC 140 may, e.g. determine to send a first Information Element (IE), which indicates a Transmission Time Interval (TTI) value, in a dedicated radio link message based on the received indication from the network node 130. The RNC 140 may be configured to perform the action 202, e.g. by means of a processor configured to perform the action 202, see figure 5.

**Action 203:** The RNC 140 sends a dedicated radio link message, such as e.g. a Radio Link Setup Request message, a Radio Link Reconfiguration Prepare message or a Radio Link Addition Request message, to the network node 130. The network node 130 may e.g. be a NodeB, an eNB and/or a DRNC. The dedicated radio link message comprises a first Information Element (IE) which indicates a Transmission Time Interval (TTI) value, such as e.g. 2 ms or 10 ms, out of a plurality of TTI values available for the radio link, such as e.g. 2 ms and 10 ms. The radio link may be the radio link on which the secondary uplink carrier is setup. The first IE may also be referred to as E-TTI, see e.g. example embodiments B and C and tables 1-8. The RNC may be configured to perform the action 203, e.g. by means of a transmitting module configured to perform the action 203, see figure 5.

In some embodiments, the dedicated radio link message may comprise a second IE, which second IE indicates to the network node 130 that a variable TTI configuration is set up. This may also be referred to as the second IE indicating a support of a variable TTI configuration. Hence, the variable TTI configuration may indicate that the secondary carrier supports variable TTI values. The variable TTI configuration may further indicate that both the first carrier and the secondary carrier support variable TTI values, and/or that the first and the second carrier may apply different TTI configurations, i.e. apply different TTI values. When the second IE indicates a variable TTI configuration or support of a variable TTI configuration, the value of the variable TTI may be indicated by the first IE in the radio link message, see e.g. table 5, 7 and 8. This may be done in order to setup the secondary uplink carrier.

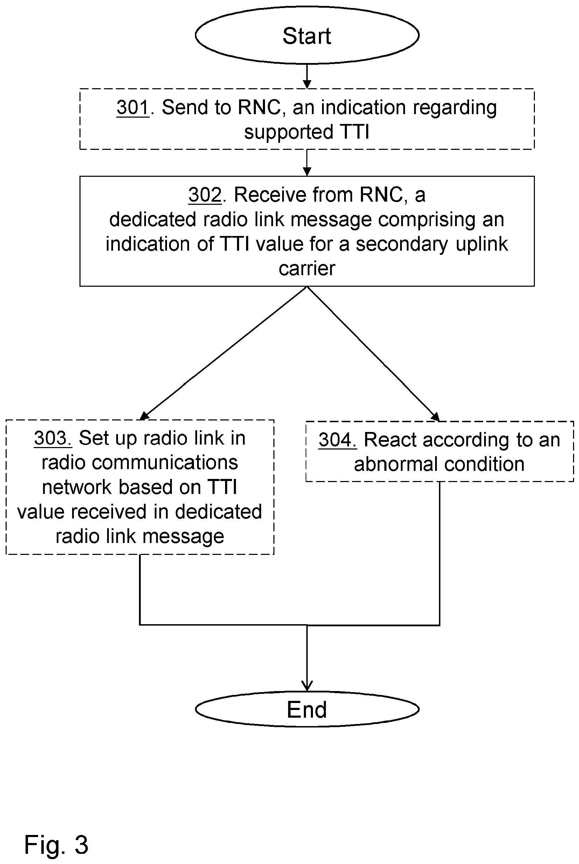

**Figure 3** discloses a flowchart depicting a method performed by the network node 130, for setting up a secondary uplink carrier, such as e.g. a secondary Uplink Enhanced Dedicated Channel (E-DCH) carrier in a radio communications network. Actions performed in some embodiments only are marked with dashed boxes.

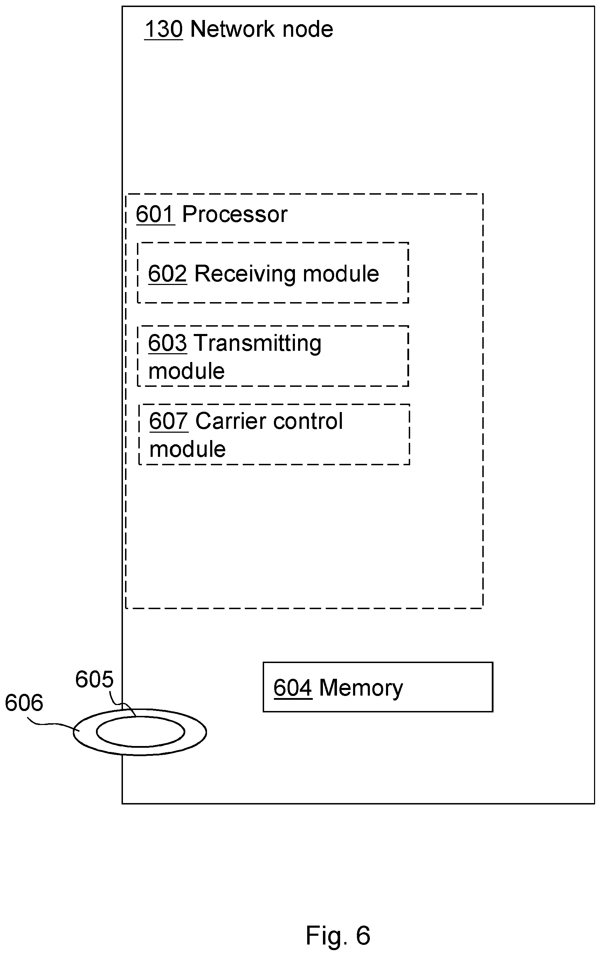

**Action 301:** The network node 130 may send an indication to the RNC 140, wherein the indication indicates that the network node 130 supports a variable TTI for the secondary uplink carrier, see e.g. embodiment B step 401 and example embodiment C step 1. The network node may be configured to perform the action 301, e.g. by means of a sending module configured to perform the action 301, see figure 6.

**Action 302:** The network node 130 receives a dedicated radio link message, such as e.g. a Radio Link Setup Request message, a Radio Link Reconfiguration Prepare message or a Radio Link Addition Request message, from the RNC 140. The dedicated radio link message comprises a first Information Element, IE, which first IE indicates a TTI value, such as e.g. 2 ms or 10 ms, out of a plurality of TTI values available for the secondary uplink carrier, such as e.g. 2 ms or 10 ms. The first IE corresponds to the TTI IE described in further detail in example embodiment A below. The first IE may also be referred to as E-TTI, see e.g. example embodiments B and C and tables 1-8. The network node may be configured to perform the action 302, e.g. by means of a receiving module configured to perform the Action 302, see figure 6.

When the network node 130 has sent the indication to the RNC 140, the network node 130 may receive the IE in the dedicated radio link message based on the sent indication, such that the network node 130 receives the IE when it has indicated that it supports a variable TTI. This embodiment corresponds to the example embodiment B described below.

In some embodiments herein the dedicated radio link message may comprise a second IE. The second IE indicates to the network node 130 that a variable TTI configuration is set up, which may also be referred to as the second IE indicating a support of a variable TTI configuration, for e.g. the secondary carrier. According to some embodiments herein, when the second IE indicates a variable TTI configuration, the value of the variable TTI may be indicated by the first IE. This embodiment corresponds to example embodiment C or D described in further detail below. The second IE may herein also be referred to as "New TTI Configuration Indicator", "10ms TTI Configuration Indicator" or "10ms TTI Indicator". When the second IE indicates a variable TTI configuration, the value of the variable TTI may be indicated by the first IE, see e.g. example embodiments C and D and table 5, 7 and 8.

**Action 303:** The network node 130 may set up a radio link in a radio communications network based on a TTI value received in a dedicated radio link message. The network node 130 may e.g. set up the secondary uplink carrier in the radio communications network based on the TTI value indicated by the first IE comprised in the dedicated radio link message. The network node may be configured to perform this action 303, e.g. by means of a processor configured to perform this action 303, see figure 6.

**Action 304:** When the network node 130 fails to execute the procedure based on the received dedicated radio link message, the network node 130 may react according to an abnormal condition. The abnormal condition may comprise failing the current secondary uplink carrier setup procedure. In a further embodiment the abnormal condition may comprise continuing the secondary uplink carrier setup procedure with a predefined TTI value. The network node may, when the network node fails to execute the procedure based on the received dedicated radio link message, react according to the Abnormal Condition specified in a Node B Application Part (NBAP) and/or a Radio Network Subsystem Application Part (RNSAP) specification for the dedicated radio link message. The network node may be configured to perform this action 304, e.g. by means of a processor configured to perform this action 304, see figure 6. The network node may e.g. fail to execute the procedure due to missing information in the message, such as e.g. a missing first and/or a second IE, or due to the network node not supporting a variable TTI for the secondary carrier. The abnormal conditions may e.g. specify that the network node shall fail the current secondary uplink carrier setup procedure or continue the secondary uplink carrier setup procedure with a predefined TTI value, such as e.g. 2 ms, see also alternative example embodiment C step 4.

**Example Embodiment A:** A TTI IE, which may herein also be referred to as a first IE, for the secondary E-DCH carrier may be introduced with criticality defined as "Reject". The possible values for the IE, which may also be referred to as E-TTI, may e.g. be 2ms or 10ms TTI. A clarification may be made to the specification that "the absence of this TTI IE means that the 2ms TTI is used". One example is to introduce this in the existing "Additional E-DCH FDD Information" IE, shown in **Table 1.** It is however also possible to introduce the E-TTI IE in other related IE groups or in other positions inside the IE groups.

A variation to embodiment A is that the new introduced E-TTI IE only has a value 10ms. And a clarification is made to the specification that "the absence of this E-TTI IE means 2ms TTI", refer to **Table 2.**

This embodiment corresponds to Action 203 performed by the RNC 140 and Action 302 performed by the network node 130.This embodiment is very simple, but not easy to detect faults and not easy to specify handling when abnormal situation occurs.

**Example Embodiment B:** The network node 130, such as a Node B, and/or a DRNC may indicate to the SRNC that it can handle, which may also be referred to as that it supports, the new TTI configurations (such as e.g. 2ms TTI + 10ms TTI, 10ms TTI + 2ms TTI, 10ms TTI + 10ms TTI) in DC-HSUPA and DB-DC-HSUPA. In this case the DRNC may work as a relay between the NodeB and the SNRC. In other words, the network node may send an indication to the DRNC, which then forwards the indication to the SNRC. This corresponds to Action 201 performed by the RNC 140 and Action 301 performed by the network node 130.The RNC which supports the new TTI configuration will upon receiving of such an indication, always include the new E-TTI IE and indicate the TTI value when set up or reconfiguring the secondary E-DCH carrier. See e.g. **Table 3** and **Table 4.**

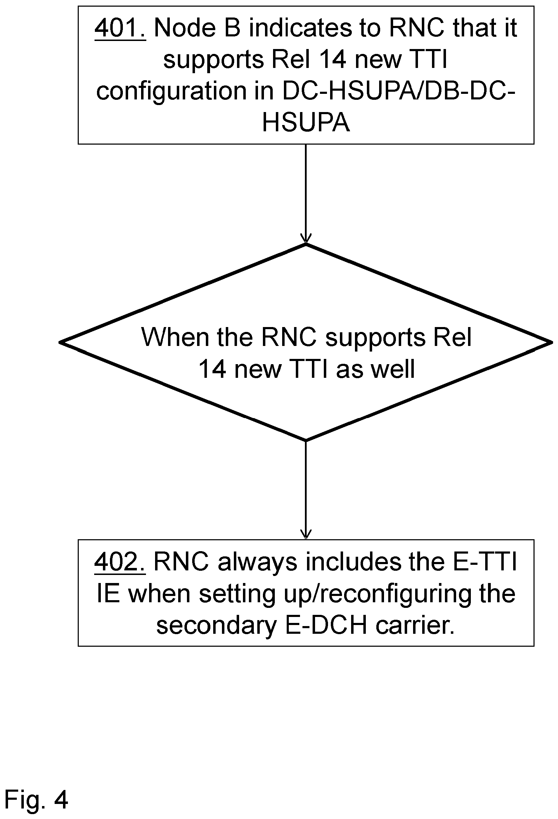

**Figure 4** discloses a flowchart depicting a method according to example embodiment B. The specification impacts:
**Action 401:** An explicit indication is sent from Node B/DRNC to RNC to state that it supports new TTI configuration in DC-HSUPA/DB-DC-HSUPA, in correspondence with Action 201 performed by the RNC 140 and Action 301 performed by the network node 130. It may be more beneficial to specify one indication for each TTI configuration (e.g. 2ms + 10ms, 10ms + 2ms, 10ms + 10ms). This indication/indications may be set on Cell basis and may be included in an Audit and Resource Status Indication procedure, for example to be added to an existing Node B Cell Capability Container.

Another variation may be to indicate that the Node B supports to send up the secondary E-DCH in 10ms TTI.

**Action 402:** The RNC always includes the E-TTI IE when setting up/reconfiguring the secondary E-DCH carrier. The NBAP/RNSAP specification may be modified to state if the Node B indicates its support for the new TTI configuration in DC-HSUPA and DB-DC-HSUPA and if the RNC supports the new configuration as well, it should always include the optional IE to specify the TTI value for the secondary E-DCH carrier. This embodiment puts the responsibility for sending the IE TTI on the SRNC.

**Example Embodiment C:** The RNC indicates that the new TTI configuration for DC-HSUPA and DB-DC-HSUPA is going to be set up/added /reconfigured for the secondary E-DCH carrier. Another new E-TTI IE, which may herein also be referred to as a second IE, may be introduced as a "conditional IE". The condition is specified as the E-TTI IE shall be presented if RNC indicates the new TTI configuration is setting up, i.e. the Indicator of new TTI configuration IE is presented. Refer to **Table 5.**

The Abnormal Conditions in NBAP/RNSAP specification in Radio Link Setup, Radio Addition, Radio Link Reconfiguration procedures may also be modified to state that: for the secondary E-DCH carrier, if RNC indicates the Rel 14 new TTI configuration is used for secondary E-DCH, or 10ms TTI is used for the secondary E-DCH carrier, but the E-TTI IE is not presented, Node B should fail the current procedure, refer to **Table 6.**

Another variation of the embodiment C is if the Abnormal Condition is defined, the E-TTI IE may be introduced as an optional IE.

Another variation to embodiment C may be that the RNC indicates that the 10ms TTI is used for the secondary E-DCH carrier and the TTI IE with only value 10ms is introduced as "conditional IE", refer to **Table 7.**

It an alternative embodiment embodiment B Action 401 may be combined with embodiment C. Such a specification impacts:
1. An explicit indication/indications is sent from the network node 130, such as a Node B and/or a DRNC to the RNC to state that it supports the Rel 14 new TTI configuration for DC-HSUPA and DB-DC-HSUPA.
2. The RNC indicates to the Node B that such a configuration is being set up.
3. A new E-TTI IE is introduced for the secondary E-DCH carrier.
4. The Abnormal Conditions in the NBAP and/or RNSAP specification in Radio Link Setup, Radio Addition or Radio Link Reconfiguration procedures may be modified to state that if the RNC indicates the Rel 14 TTI configuration and if the E-TTI IE is not presented, then the Node B shall fail the current procedure.

**Embodiment D:** The RNC may indicate if the 10ms TTI is going to be set up/added /reconfigured for the secondary E-DCH carriers, it also indicates if 10ms TTI is removed, i.e. reconfigured to 2ms TTI. Refer to **Table 8.** In the procedure text, it may be specified that this IE is used to indicate if 10ms TTI is used or it is reconfigured to 2ms TTI. The absence of the IE means that 2ms TTI is used.

The embodiments described above may be implemented on the NBAP (3GPP TS 25.433 V13.0.0) /RNSAP (3GPP TS 25.423 v13.0.0) specification. The new IEs may be added to IEs related to a secondary E-DCH setting up/addition/reconfiguration, in the RADIO LINK SETUP REQUEST, RADIO LINK ADDITION REQUEST, and/or RADIO LINK RECONFIGURATION PREPARE messages.

Alternative Embodiments may also be implemented by combining the different steps in the embodiments presented, and by introducing the new IEs in some other places. These other places may e.g. be any other message sent between the RNC 140 and the network node 130.

Release 14 new TTI configuration in DC-HSUPA and DB-DC-HSUPA, as used herein allows that the primary carrier may e.g. be on 2ms TTI or 10 ms TTI and the secondary carrier may be on 2ms TTI or 10 ms TTI. However, other TTIs than 2ms and 10ms may also be used.

The backwards non-compatibility issue caused by the introduction of the Release 14 new TTI configuration in DC-HSUPA/DB-DC-HSUPA in the secondary E-DCH carrier is overcome by embodiments herein. The embodiments herein may be able to read in the related specifications.

**Fig. 5** is a block diagram depicting the Radio Network Controller (RNC) 140 for performing the method for setting up a secondary uplink carrier in the communications network 100. The RNC 140 may comprise a **processing unit 501**, such as e.g. one or more processors, configured to perform the method described herein, as performed by the RNC 140. Dashed lines of a box in Figure 5 indicate that this box is not mandatory and relate to some embodiments only.

The RNC 140 is configured to, e.g. by means of a **transmitting module 502** and/or the processing unit 501 being configured to, send a dedicated radio link message to the network node 130. The dedicated radio link message comprises a first Information Element, IE, which indicates a Transmission Time Interval (TTI) value out of a plurality of TTI values available for the radio link.

The RNC 140 may further be configured to, e.g. by means of the processing unit 501 or a **receiving module 503** being configured to, receive, prior to sending the dedicated radio link message to the network node 130, an indication from the network node indicating that the network node 130 supports a variable TTI for the secondary uplink carrier.

The RNC 140 may further be configured to, e.g. by means of the processing unit 501 or a **determining module 507** being configured to, determine to send the first IE in the dedicated radio link message based on the received indication from the network node 130.

The RNC 140 further comprises **a memory 504.** The memory 504 comprises one or more units to be used to store data on, such as system information, IDLE mode mobility information, network slice information, wireless device IDs, network slice and roaming policies, Slice IDs, applications to perform the methods disclosed herein when being executed, and similar.

The methods according to the embodiments described herein for the RNC 140 may respectively be implemented by means of e.g. **a computer program 505** or a computer program product, comprising instructions, i.e. software code portions, which, when executed on at least one processor, cause the at least one processor to carry out the actions described herein, as performed by the determining module. The computer program 505 may be stored on **a computer-readable storage medium 506**, e.g. a disc or similar. The computer-readable storage medium 506, having stored thereon the computer program, may comprise the instructions which, when executed on at least one processor, cause the at least one processor to carry out the actions described herein, as performed by the determining module. In some embodiments, the computer-readable storage medium may be a non-transitory computer-readable storage medium.

**Fig. 6** is a block diagram depicting the network node 130 for performing the method for setting up a secondary uplink carrier. The network node 130 may comprise a **processing unit 601**, such as e.g. one or more processors, configured to perform the method described herein, as performed by the network node 130. Dashed lines of a box in Figure 6 indicate that this box is not mandatory and relate to some embodiments only.

The network node 130 is configured to, e.g. by means of a **receiving module 602** and/or the processing unit 601 being configured to, receive a dedicated radio link message from the RNC 140. The dedicated radio link message comprises a first Information Element (IE) which indicates a Transmission Time Interval (TTI) value out of a plurality of TTI values available for the secondary uplink carrier.

The network node 130 may further be configured to, e.g. by means of the processing unit 601 or a **transmitting module 603** being configured to, send, prior to receiving the dedicated radio link message from the RNC, an indication to the RNC, wherein the indication indicates that the network node supports a variable TTI for the secondary uplink carrier.

The network node 130 may further be configured to, e.g. by means of the processing unit 601 or a **carrier control module 607** being configured to, set up the secondary uplink carrier in the radio communications network based on the TTI value indicated by the first IE comprised in the dedicated radio link message.

The network node 130 may further be configured to, e.g. by means of the processing unit 601 or the **carrier control module 607** being configured to, react according to an abnormal condition, when the network node fails to execute the procedure based on the received dedicated radio link message. The abnormal condition may comprise failing the current secondary uplink carrier setup procedure. In a further embodiment the abnormal condition may comprise continuing the secondary uplink carrier setup procedure with a predefined TTI value.

The network node 130 further comprises **a memory 604.** The memory 604 may comprise one or more units to be used to store data on, such as system information, IDLE mode mobility information, network slice information, wireless device IDs, network slice and roaming policies, Slice IDs, applications to perform the methods disclosed herein when being executed, and similar.

The methods according to the embodiments described herein for the network node 130 may respectively be implemented by means of e.g. **a computer program 605** or a computer program product, comprising instructions, i.e., software code portions, which, when executed on at least one processor, cause the at least one processor to carry out the actions described herein, as performed by the determining module. The computer program 605 may be stored on a **computer-readable storage medium 606**, e.g. a disc or similar. The computer-readable storage medium 606, having stored thereon the computer program, may comprise the instructions which, when executed on at least one processor, cause the at least one processor to carry out the actions described herein, as performed by the determining module. In some embodiments, the computer-readable storage medium may be a non-transitory computer-readable storage medium.

As will be readily understood by those familiar with communications design, that functions means or modules described herein may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and nonvolatile memory. Other hardware, conventional and/or custom, may also be included. Designers of network nodes will appreciate the cost, performance, and maintenance trade-offs inherent in these design choices.

The embodiments herein may be implemented through one or more processors, such as the processor 501 in the RNC 140 depicted in **Figure 5**, and the processor 601 in the network node 130 depicted in **Figure 6** together with computer program code for performing the functions and actions of the embodiments herein. The program code mentioned above may also be provided as a computer program product, for instance in the form of a data carrier carrying computer program code for performing the embodiments herein when being loaded into the network node 130 and the RNC 140. One such carrier may be in the form of a CD ROM disc. It is however feasible with other data carriers such as a memory stick. The computer program code may furthermore be provided as pure program code on a server and downloaded to the network node and RNC.

Thus, the methods according to the embodiments described herein performed by the network node and the RNC may be implemented by means of a computer program product, comprising instructions, i.e., software code portions, which, when executed on at least one processor, cause the at least one processor to carry out the actions described herein, as performed by the network node and the RNC. The computer program product may be stored on a computer-readable storage medium. The computer-readable storage medium, having stored there on the computer program, may comprise the instructions which, when executed on at least one processor, cause the at least one processor to carry out the actions described herein, as performed by the network node and the RNC. In some embodiments, the computer-readable storage medium may be a non-transitory computer-readable storage medium.

The network node 130 and RNC 140 may further each comprise **a memory 504, 604** comprising one or more memory units. The memory is arranged to be used to store obtained information such as indications of a mobility set, identifiers of APs and WLANs, identifiers of UEs, ciphering keys, measurements of signals from radio access nodes, measurement reports or parts thereof and applications etc. to perform the methods herein when being executed in the network node and RNC.

In some embodiments, a computer program comprises instructions, which when executed by the at least one processor such as the processing unit 501, 601, cause the at least one processing unit 501, 601 to perform actions according to any of the above Actions.

Hence, in some embodiments the RNC may comprise a processor and a memory, said memory containing instructions executable by said processor whereby said RNC is operative to perform the method steps 201-203 as described above.

Correspondingly, in some embodiments, the network node may comprise a processor and a memory, said memory containing instructions executable by said processor whereby said network node is operative to perform the method steps 301-304 as described above.

In some embodiments, a carrier comprises the computer program, wherein the carrier is one of an electronic signal, an optical signal, an electromagnetic signal, a magnetic signal, an electric signal, a radio signal, a microwave signal, or a computer-readable storage medium.

**Table 1, below is extract from TS 25.433 (v. 12.0.0), 9.2.2.137 Additional E-DCH FDD Information. In this example, a new IE "E-TTI" is introduced which may be set to "2ms" or "10ms". It may also be specified that "the absence of this IE means 2ms TTI"**

| **IE/Group Name** | **Pres ence** | **Range** | **IE Type and Reference** | **Semantics Description** | **Criticality** | **Assigned Criticality** |
|---|---|---|---|---|---|---|
| **Additional E-DCH MAC-d Flows Specific Information** | | *0..*<*ma xNrOfE DCHM ACdFlo ws*> | | | | |
| >E-DCH MAC-d Flow ID | M | | 9.2.1.74 | | - | |
| >Binding ID | O | | 9.2.1.4 | Shall be ignored if bearer establishment with ALCAP | - | |
| >Transport Layer Address | O | | 9.2.1.63 | Shall be ignored if bearer establishment with ALCAP | - | |
| HARQ Process Allocation For 2ms Scheduled Transmission Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Minimum Set E-TFCI | O | | INTEGER (0..127) | For the concept of "E-DCH Minimum Set of TFCs" see TS 25.321 [32] and TS 25.331 [18] | - | |
| **DTX Information 2** | | *0..1* | | | | |
| >UE DTX Cycle 1 | M | | ENUMERA T ED (v1, v4, v5, v8, v10, v16, v20,...) | Units of subframes, refer to TS 25.331 [16]. | YES | ignore |
| >UE DTX Cycle 2 | M | | ENUMERA T ED (v4, v5, v8, v10, v16, v20, v32, v40, v64, v80, v128, v160, v256, v320, v512, v640, v1024, v1280,...) | Units of subframes, refer to TS 25.331 [16]. | YES | ignore |
| >Inactivity Threshold for UE DTX Cycle 2 | M | | ENUMERA T ED (v1, v4, v8, v16, v32, v64, v128, v256,...) | Units of E-DCH TTIs, refer to TS 25.331 [16]. | YES | ignore |
| Implicit Grant handling | O | | ENUMERAT ED (true) | The presence of this information element indicates that Implicit Grant handling is configured on the secondary uplink frequency | YES | ignore |
| Minimum TEBS threshold | O | | ENUMERA T ED (v2, v4, v8, v16, v32, v64, v128, v256, v512, v1024, v2K, v4K, v8K, v16K, v32K, v64K, v128K, v256K, v512K, v1024K,...) | In bytes And N Kbytes = N*1024 bytes. Twelve spare values are needed, refer to TS 25.331 [16]. | YES | ignore |
| **E-TTI** | **○** | | **ENUMERA TED (2ms, 10ms)** | **The absence of this IE means 2ms TTI.** | **YES** | **reject** |

**Table 2, below is extract from TS 25.433 (v. 12.0.0), 9.2.2.137 Additional E-DCH FDD Information. In this example, a new IE "E-TTI" is introduced which may be set to "10ms". It may also be specified that "the absence of this IE means 2ms TTI"**

| | | | | | | |
|---|---|---|---|---|---|---|
| **IE/Group Name** | **Pre sen ce** | **Range** | **IE Type and Reference** | **Semantics Description** | **Criticality** | **Assigned Criticality** |
| **Additional E-DCH MAC-d Flows Specific Information** | | *0..*<*ma xNrOfE DCHM ACdFlo ws>* | | | | |
| >E-DCH MAC-d Flow ID | M | | 9.2.1.74 | | - | |
| >Binding ID | O | | 9.2.1.4 | Shall be ignored if bearer establishment with ALCAP | - | |
| >Transport Layer Address | O | | 9.2.1.63 | Shall be ignored if bearer establishment with ALCAP | - | |
| HARQ Process Allocation For 2ms Scheduled Transmission Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Minimum Set E-TFCI | O | | INTEGER (0..127) | For the concept of "E-DCH Minimum Set of TFCs" see TS 25.321 [32] and TS 25.331 [18] | - | |
| **DTX Information2** | | *0..1* | | | | |
| >UE DTX Cycle 1 | M | | ENUMERAT ED (v1, v4, v5, v8, v10, v16, v20,...) | Units of subframes, refer to TS 25.331 [16]. | YES | ignore |
| >UE DTX Cycle 2 | M | | ENUMERAT ED (v4, v5, v8, v10, v16, v20, v32, v40, v64, v80, v128, v160, v256, v320, v512, v640, v1024, v1280,...) | Units of subframes, refer to TS 25.331 [16]. | YES | ignore |
| >Inactivity Threshold for UE DTX Cycle 2 | M | | ENUMERAT ED (v1, v4, v8, v16, v32, v64, v128, v256,...) | Units of E-DCH TTIs, refer to TS 25.331 [16]. | YES | ignore |
| Implicit Grant handling | O | | ENUMERAT ED (true) | The presence of this information element indicates that Implicit Grant handling is configured on the secondary uplink frequency | YES | ignore |
| Minimum TEBS threshold | O | | ENUMERAT ED (v2, v4, v8, v16, v32, v64, v128, v256, v512, v1024, v2K, v4K, v8K, v16K, v32K, v64K, v128K, v256K, v512K, v1024K,...) | In bytes And N Kbytes = N*1024 bytes. Twelve spare values are needed, refer to TS 25.331 [16]. | YES | ignore |
| **E-TTI** | **O** | | **ENUMERA TED (10ms)** | **The absence of this IE means 2ms TTI.** | **YES** | **reject** |

**Table 3, below is extract from TS 25.433 (v. 12.0.0), 9.2.2.137 Additional E-DCH FDD Information. In this example, a new IE "E-TTI" is introduced which may be set to "2ms" and "10ms". It may also be specified in the specification that if both Node B and RNC supports the new Rel 14 TTI configuration for DC-HSUPA/DB-DC-HSUPA, it always includes the E-TTI IE in secondary E-DCH carrier. In this example, the new IE may have criticality as "ignore".**

| **IE/Group Name** | **Pre sen ce** | **Range** | **IE Type and Reference** | **Semantics Description** | **Criticality** | **Assigned Criticality** |
|---|---|---|---|---|---|---|
| **Additional E-DCH MAC-d Flows Specific Information** | | *0..*<*ma xNrOfE DCHM ACdFlo ws*> | | | | |
| >E-DCH MAC-d Flow ID | M | | 9.2.1.74 | | - | |
| >Binding ID | O | | 9.2.1.4 | Shall be ignored if bearer establishment with ALCAP | - | |
| >Transport Layer Address | O | | 9.2.1.63 | Shall be ignored if bearer establishment with ALCAP | - | |
| HARQ Process Allocation For 2ms Scheduled Transmission Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Minimum Set E-TFCI | O | | INTEGER (0..127) | For the concept of "E-DCH Minimum Set of TFCs" see TS 25.321 [32] and TS 25.331 [18] | - | |
| **DTX Information2** | | *0*.*.1* | | | | |
| >UE DTX Cycle 1 | M | | ENUMERAT ED (v1, v4, v5, v8, v10, v16, v20,...) | Units of subframes, refer to TS 25.331 [16]. | YES | ignore |
| >UE DTX Cycle 2 | M | | ENUMERAT ED (v4, v5, v8, v10, v16, v20, v32, v40, v64, v80, v128, v160, v256, v320, v512, v640, v1024, v1280,...) | Units of subframes, refer to TS 25.331 [16]. | YES | ignore |
| >Inactivity Threshold for UE DTX Cycle 2 | M | | ENUMERAT ED (v1, v4, v8, v16, v32, v64, v128, v256,...) | Units of E-DCH TTIs, refer to TS 25.331 [16]. | YES | ignore |
| Implicit Grant handling | O | | ENUMERAT ED (true) | The presence of this information element indicates that Implicit Grant handling is configured on the secondary uplink frequency | YES | ignore |
| Minimum TEBS threshold | O | | ENUMERAT ED (v2, v4, v8, v16, v32, v64, v128, v256, v512, v1024, v2K, v4K, v8K, v16K, v32K, v64K, v128K, v256K, v512K, v1024K,...) | In bytes And N Kbytes = N*1024 bytes. Twelve spare values are needed, refer to TS 25.331 [16]. | YES | ignore |
| **E-TTI** | **O** | | **ENUMERA TED (2ms, 10ms)** | | **YES** | **reject or ignore** |

**Table 4, below is an example to add in the NBAP/RNASP specification:**

| New procedure text |
|---|
| For the secondary E-DCH carrier, if the Node B indicates the Rel 14 new TTI configuration in DC-HSUPA and DB-DC-HSUPA, and RNC supports it as well, the E-TTI IE in the secondary E-DCH carrier shall always be included. |

**Table 5, below is extract from TS 25.433 (v. 12.0.0), 9.2.2.137 Additional E-DCH FDD Information. In this example, the new second IE "New TTI Configuration Indicator" is introduced to indicate that the RNC is intending to setup the Rel 14 new TTI configuration in the secondary E-DCH carrier. A new first "E-TTI" IE is introduced as a conditional IE. The condition is specified.**

| **IE/Group Name** | **Presence** | **Range** | **IE Type and Reference** | **Semantics Descriptio n** | **Criticality** | **Assigned Criticality** |
|---|---|---|---|---|---|---|
| **Additional E-DCH MAC-d Flows Specific Informatio n** | | *0..* <*maxNr OfEDCHM ACdFlows>* | | | | |
| >E-DCH MAC-d Flow ID | M | | 9.2.1.74 | | - | |
| >Binding ID | O | | 9.2.1.4 | Shall be ignored if bearer establishm ent with ALCAP | - | |
| >Transpo rt Layer Address | O | | 9.2.1.63 | Shall be ignored if bearer establishm ent with ALCAP | - | |
| HARQ Process Allocation For 2ms Scheduled Transmissi on Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Minimum Set E-TFCI | O | | INTEGER (0..127) | For the concept of "E-DCH Minimum Set of TFCs" see TS 25.321 [32] and TS 25.331 [18] | - | |
| **DTX Informatio n2** | | *0..1* | | | | |
| >UE DTX Cycle 1 | M | | ENUMERA TED (v1, v4, v5, v8, v10, v16, v20,...) | Units of subframes, refer to TS 25.331 [16]. | YES | ignore |
| >UE DTX Cycle 2 | M | | ENUMERA TED (v4, v5, v8, v10, v16, v20, v32, v40, v64, v80, v128, v160, v256, v320, v512, v640, v1024, v1280,...) | Units of subframes, refer to TS 25.331 [16]. | YES | ignore |
| >Inactivit y Threshol d for UE DTX Cycle 2 | M | | ENUMERA TED (v1, v4, v8, v16, v32, v64, v128, v256,...) | Units of E-DCH TTIs, refer to TS 25.331 [16]. | YES | ignore |
| Implicit Grant handling | O | | ENUMERA TED (true) | The presence of this information element indicates that Implicit Grant handling is configured on the secondary uplink frequency | YES | ignore |
| Minimum TEBS threshold | O | | ENUMERA TED (v2, v4, v8, v16, v32, v64, v128, v256, v512, v1024, v2K, v4K, v8K, v16K, v32K, v64K, v128K, v256K, v512K, v1024K,...) | In bytes And N Kbytes = N*1024 bytes. Twelve spare values are needed, refer to TS 25.331 [16]. | YES | ignore |
| **New TTI Configur ation Indicator** | **O** | | **NULL** | **Indicates Rel 14 the new TTI configura tion in DC-HSUPA and DB-DC-HSUPA** | **YES** | **reject** |
| **E-TTI** | **C-New TTI Configur ation Indicator** | | **ENUMER ATED (2ms, 10ms)** | | **YES** | **reject** |

| **Condition** | | | **Explanation** | | | |
|---|---|---|---|---|---|---|
| New TTI Configuration Indicator | | | This IE shall be present if the *New TTI Configuration Indicator* IE is presented | | | |

**Table 6, below is an extract from TS 25.433, 8.2.17.4 Abnormal Conditions. In this example, we introduce the failure handling if the E-TTI is not presented while RNC is intending to setup the Rel 14 multicarrier TTI configuration, e.g. some of the TTI configuration, 2ms + 10ms. 10ms+10ms, 10ms+2ms.**

| | New Abnormal handling Example |
|---|---|
| 8.2.17.4 Abnormal Conditions | For the secondary E-DCH carrier, if the RNC indicate the Rel 14 new TTI configuration in DC-HSUPA and DB-DC-HSUPA, but the E-TTI IE is not presented then the Node B shall reject the procedure using the RADIO LINK SETUP FAILURE message. |

**Table 7, below is an extract from 3GPP TS 25.433 (v. 12.0.0), 9.2.2.137 Additional E-DCH FDD Information. In this example, we introduce a new IE "E-TTI" which may e.g. be set to "10ms".**

| **IE/Group Name** | **Presence** | **Range** | **IE Type and Reference** | **Semantics Descriptio n** | **Criticality** | **Assigned Criticality** |
|---|---|---|---|---|---|---|
| **Additional E-DCH MAC-d Flows Specific Informatio n** | | *0..* <*maxNr OfEDCHM ACdFlows>* | | | | |
| >E-DCH MAC-d Flow ID | M | | 9.2.1.74 | | - | |
| >Binding ID | O | | 9.2.1.4 | Shall be ignored if bearer establishm ent with ALCAP | - | |
| >Transpo rt Layer Address | O | | 9.2.1.63 | Shall be ignored if bearer establishm ent with ALCAP | - | |
| HARQ Process Allocation For 2ms Scheduled Transmissi on Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Minimum Set E-TFCI | O | | INTEGER (0..127) | For the concept of "E-DCH Minimum Set of TFCs" see TS 25.321 [32] and TS 25.331 [18] | - | |
| **10ms TTI Configur ation Indicator** | **O** | | **NULL** | **Indicates the secondar y E-DCH is on 10ms TTI** | **YES** | **reject** |
| **E-TTI** | **C- 10ms TTI Configur ation Indicator** | | **ENUMER ATED (10ms)** | | **YES** | **reject** |
| **DTX Informatio n2** | | *0..1* | | | | |
| >UE DTX Cycle 1 | M | | ENUMERA TED (v1, v4, v5, v8, v10, v16, v20,...) | Units of subframes, refer to TS 25.331 [16]. | YES | ignore |
| >UE DTX Cycle 2 | M | | ENUMERA TED (v4, v5, v8, v10, v16, v20, v32, v40, v64, v80, v128, v160, v256, v320, v512, v640, v1024, v1280,...) | Units of subframes, refer to TS 25.331 [16]. | YES | ignore |
| >Inactivit y Threshol d for UE DTX Cycle 2 | M | | ENUMERA TED (v1, v4, v8, v16, v32, v64, v128, v256,...) | Units of E-DCH TTIs, refer to TS 25.331 [16]. | YES | ignore |
| Implicit Grant handling | O | | ENUMERA TED (true) | The presence of this information element indicates that Implicit Grant handling is configured on the secondary uplink frequency | YES | ignore |
| Minimum TEBS threshold | O | | ENUMERA TED (v2, v4, v8, v16, v32, v64, v128, v256, v512, v1024, v2K, v4K, v8K, v16K, v32K, v64K, v128K, v256K, v512K, v1024K,...) | In bytes And N Kbytes = N*1024 bytes. Twelve spare values are needed, refer to TS 25.331 [16]. | YES | ignore |
| **10ms TTI Configur ation Indicator** | **O** | | **NULL** | **Indicates the secondar y E-DCH is on 10ms TTI** | **YES** | **reject** |
| **E-TTI** | **C- 10ms TTI Configur ation Indicator** | | **ENUMER ATED (10ms)** | | **YES** | **reject** |

| **Condition** | | | **Explanation** | | | |
|---|---|---|---|---|---|---|
| 10ms TTI Configuration Indicator | | | This IE shall be present if the *10ms TTI Configuration Indicator* IE is presented | | | |

**Table 8, below is extract from TS 25.433 (v. 12.0.0), 9.2.2.137 Additional E-DCH FDD Information. In this example, we introduce a new IE "10 ms TTI Indicator" which can be set to "10ms TTI used, 10ms TTI removed".**

| **IE/Group Name** | **Presence** | **Range** | **IE Type and Reference** | **Semantics Descriptio n** | **Criticality** | **Assigned Criticality** |
|---|---|---|---|---|---|---|
| **Additional E-DCH MAC-d Flows Specific Informatio n** | | *0..* <*maxNr OfEDCHM ACdFlows>* | | | | |
| >E-DCH MAC-d Flow ID | M | | 9.2.1.74 | | - | |
| >Binding ID | O | | 9.2.1.4 | Shall be ignored if bearer establishm ent with ALCAP | - | |
| >Transpo rt Layer Address | O | | 9.2.1.63 | Shall be ignored if bearer establishm ent with ALCAP | - | |
| HARQ Process Allocation For 2ms Scheduled Transmissi on Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Minimum Set E-TFCI | O | | INTEGER (0..127) | For the concept of "E-DCH Minimum Set of TFCs" see TS 25.321 [32] and TS 25.331 [18] | - | |
| **DTX Informatio n2** | | *0..1* | | | | |
| >UE DTX Cycle 1 | M | | ENUMERA TED (v1, v4, v5, v8, v10, v16, v20,...) | Units of subframes, refer to TS 25.331 [16]. | YES | ignore |
| >UE DTX Cycle 2 | M | | ENUMERA TED (v4, v5, v8, v10, v16, v20, v32, v40, v64, v80, v128, v160, v256, v320, v512, v640, v1024, v1280,...) | Units of subframes, refer to TS 25.331 [16]. | YES | ignore |
| >Inactivit y Threshol d for UE DTX Cycle 2 | M | | ENUMERA TED (v1, v4, v8, v16, v32, v64, v128, v256,...) | Units of E-DCH TTIs, refer to TS 25.331 [16]. | YES | ignore |
| Implicit Grant handling | O | | ENUMERA TED (true) | The presence of this information element indicates that Implicit Grant handling is configured on the secondary uplink frequency | YES | ignore |
| Minimum TEBS threshold | O | | ENUMERA TED (v2, v4, v8, v16, v32, v64, v128, v256, v512, v1024, v2K, v4K, v8K, v16K, v32K, v64K, v128K, v256K, v512K, v1024K,...) | In bytes And N Kbytes = N*1024 bytes. Twelve spare values are needed, refer to TS 25.331 [16]. | YES | ignore |
| **10 ms TTI Indicator** | **O** | | **ENUMER ATED (10ms TTI used, 10ms TTI removed)** | | **YES** | **reject** |

### ABBREVIATIONS

- HSUPA: High Speed Uplink Packet Access
- E-DCH: uplink enhanced dedicated channel
- RNC: Radio Network Controller
- SRNC: Serving Radio Network Controller
- DRNC: Drifting Radio Network Controller
- NBAP: Node B Application Part
- RNSAP: Radio Network Subsystem Application Part
- DC-HSUPA: Dual Cell HSUPA
- DB-DC-HSUPA: Dual Band DC-HSUPA

## Claims

1. A method, performed by a Radio Network Controller, RNC, (140) for setting up a secondary uplink carrier, wherein the method comprises:
receiving (201) an indication from a network node (130), wherein the network node is a radio base station, and wherein the indication indicates that the network node (130) supports a variable Transmission Time Interval, TTI, for the secondary uplink carrier;
determining (202) to send a first Information Element, IE, in a dedicated radio link message based on the received indication from the network node (130); and
sending (203) the dedicated radio link message to the network node (130), wherein the dedicated radio link message comprises the first IE and a second IE, which first IE indicates a TTI value out of a plurality of TTI values available for the secondary uplink carrier, the indicated TTI value being for set up - by the network node - of the secondary uplink carrier in the radio communications network, and which second IE indicates to the network node (130) that a variable TTI configuration is set up.

2. A method, performed by a network node (130), for setting up a secondary uplink carrier, wherein the network node is a radio base station, and wherein the method comprises:
sending (301) an indication to a Radio Network Controller, RNC, (140), wherein the indication indicates that the network node (130) supports a variable Transmission Time Interval, TTI, for the secondary uplink carrier;
receiving (302) a dedicated radio link message from the RNC (140), wherein the dedicated radio link message comprises a first Information Element, IE, and a second IE, which first IE indicates a TTI value out of a plurality of TTI values available for the secondary uplink carrier and which second IE indicates to the network node (130) that a variable TTI configuration is set up; and
setting up (303) the secondary uplink carrier in the radio communications network based on the TTI value indicated by the first IE comprised in the dedicated radio link message.

3. The method according to claim 2, wherein the network node (130) receives the first IE in the dedicated radio link message based on the sent indication, such that the network node (130) receives the IE when it has indicated that it supports a variable TTI.

4. The method according to any of the claims 2 to 3, wherein the method when the network node (130) fails to execute the procedure based on the received dedicated radio link message, further comprises:
reacting (304) according to an abnormal condition, wherein the abnormal condition comprises failing the current secondary uplink carrier setup procedure.

5. The method according to any of the claims 2 to 3, wherein the method when the network node (130) fails to execute the procedure based on the received dedicated radio link message, further comprises:
reacting (304) according to an abnormal condition, wherein the abnormal condition comprises continuing the secondary uplink carrier setup procedure with a predefined TTI value.

6. A Radio Network Controller, RNC, (140) for performing a method for setting up a secondary uplink carrier, wherein the RNC (140) is configured to:
receive an indication from a network node (130), wherein the network node is a radio base station, and wherein the indication indicates that the network node (130) supports a variable Transmission Time Interval, TTI, for the secondary uplink carrier;
determine to send a first Information Element, IE, in a dedicated radio link message based on the received indication from the network node (130); and
send the dedicated radio link message to the network node (130), wherein the dedicated radio link message comprises the first IE and a second IE, which first IE indicates a TTI value out of a plurality of TTI values available for the secondary uplink carrier, the indicated TTI value being for set up - by the network node - of the secondary uplink carrier in the radio communications network, and which second IE indicates to the network node (130) that a variable TTI configuration is set up.

7. A network node (130), for performing a method for setting up a secondary uplink carrier, wherein the network node is a radio base station, and wherein the network node (130) is configured to:
send an indication to a Radio Network Controller, RNC, (140), wherein the indication indicates that the network node supports a variable Transmission Time Interval, TTI, for the secondary uplink carrier;
receive a dedicated radio link message from the RNC (140), wherein the dedicated radio link message comprises a first Information Element, IE, and a second IE, which first IE indicates a TTI value out of a plurality of TTI values available for the secondary uplink carrier and which second IE indicates to the network node (130) that a variable TTI configuration is set up; and
set up the secondary uplink carrier in the radio communications network based on the TTI value indicated by the first IE comprised in the dedicated radio link message.

8. The network node (130) according to claim 7, wherein the network node (130) is configured to receive the IE in the dedicated radio link message based on the sent indication, such that the network node (130) receives the IE when it has indicated that it supports a variable TTI.

9. The network node (130) according to any of the claims 7 to 8, wherein the network node (130), when the network node fails to execute the procedure based on the received dedicated radio link message, further is configured to:
react according to an abnormal condition, wherein the abnormal condition comprises failing the current secondary uplink carrier setup procedure.

10. The network node (130) according to any of the claims 7 to 8, wherein the network node (130), when the network node fails to execute the procedure based on the received dedicated radio link message, further is configured to:
react according to an abnormal condition, wherein the abnormal condition comprises continuing the secondary uplink carrier setup procedure with a predefined TTI value.

## Patentansprüche

1. Verfahren, durchgeführt von einer Funknetzsteuerung, RNC, (140) zur Einrichtung eines sekundären Uplink-Trägers, wobei das Verfahren Folgendes umfasst:
Empfangen (201) einer Angabe von einem Netzknoten (130), wobei der Netzknoten eine Funkbasisstation ist und wobei die Angabe angibt, dass der Netzknoten (130) ein variables Übertragungszeitintervall, TTI, für den sekundären Uplink-Träger unterstützt;
Bestimmen (202), ein erstes Informationselement, IE, in einer dedizierten Funkverbindungsnachricht basierend auf der vom Netzknoten (130) empfangenen Angabe zu senden; und
Senden (203) der dedizierten Funkverbindungsnachricht an den Netzknoten (130), wobei die dedizierte Funkverbindungsnachricht das erste IE und ein zweites IE umfasst, wobei das erste IE einen TTI-Wert aus einer Vielzahl von verfügbaren TTI-Werten für den sekundären Uplink-Träger angibt,
wobei der angegebene TTI-Wert für die Einrichtung - durch den Netzknoten - des sekundären Uplink-Trägers im Funkkommunikationsnetz bestimmt ist und wobei das zweite IE dem Netzknoten (130) angibt, dass eine variable TTI-Konfiguration eingerichtet ist.

2. Verfahren, durchgeführt von einem Netzknoten (130), zur Einrichtung eines sekundären Uplink-Trägers, wobei der Netzknoten eine Funkbasisstation ist und wobei das Verfahren Folgendes umfasst:
Senden (301) einer Angabe an eine Funknetzsteuerung, RNC, (140), wobei die Angabe angibt, dass der Netzknoten (130) ein variables Übertragungszeitintervall, TTI, für den sekundären Uplink-Träger unterstützt;
Empfangen (302) einer dedizierten Funkverbindungsnachricht von der RNC (140), wobei die dedizierte Funkverbindungsnachricht ein erstes Informationselement, IE, und ein zweites IE umfasst, wobei das erste IE einen TTI-Wert aus einer Vielzahl von TTI-Werten angibt, die für den sekundären Uplink-Carrier verfügbar sind, und wobei das zweite IE dem Netzknoten (130) angibt, dass eine variable TTI-Konfiguration eingerichtet ist; und
Einrichtung (303) des sekundären Uplink-Trägers im Funkkommunikationsnetz basierend auf dem TTI-Wert, der von dem ersten IE angegeben wird, das in der dedizierten Funkverbindungsnachricht umfasst ist.

3. Verfahren nach Anspruch 2, wobei der Netzknoten (130) das erste IE in der dedizierten Funkverbindungsnachricht basierend auf der gesendeten Angabe empfängt, so dass der Netzknoten (130) das IE empfängt, wenn angegeben wurde, dass er ein variables TTI unterstützt.

4. Verfahren nach einem der Ansprüche 2 bis 3, wobei das Verfahren, wenn der Netzknoten (130) das Verfahren basierend auf der empfangenen dedizierten Funkverbindungsnachricht nicht ausführt, ferner Folgendes umfasst:
Reagieren (304) in Übereinstimmung mit einem anormalen Zustand, wobei der anormale Zustand ein Versagen des aktuellen sekundären Uplink-Träger-Einrichtungsverfahrens umfasst.

5. Verfahren nach einem der Ansprüche 2 bis 3, wobei das Verfahren, wenn der Netzknoten (130) das Verfahren basierend auf der empfangenen dedizierten Funkverbindungsnachricht nicht ausführt, ferner Folgendes umfasst:
Reagieren (304) in Übereinstimmung mit einem anormalen Zustand, wobei der anormale Zustand die Fortsetzung des sekundären Uplink-Träger-Einrichtungsverfahrens mit einem vordefinierten TTI-Wert umfasst.

6. Funknetzsteuerung, RNC, (140) zum Durchführen eines Verfahrens zur Einrichtung eines sekundären Uplink-Trägers, wobei die RNC (140) konfiguriert ist, um:
eine Angabe von einem Netzknoten (130) zu empfangen, wobei der Netzknoten eine Funkbasisstation ist und wobei die Angabe angibt, dass der Netzknoten (130) ein variables Übertragungszeitintervall, TTI, für den sekundären Uplink-Träger unterstützt;
zu bestimmen, ein erstes Informationselement, IE, in einer dedizierten Funkverbindungsnachricht beruhend auf der empfangenen Angabe vom Netzknoten (130) zu senden; und
die dedizierte Funkverbindungsnachricht an den Netzknoten (130) zu senden, wobei die dedizierte Funkverbindungsnachricht das erste IE und ein zweites IE umfasst, wobei das erste IE einen TTI-Wert aus einer Vielzahl von TTI-Werten angibt, die für den sekundären Uplink-Träger verfügbar sind,
wobei der angegebene TTI-Wert für die Einrichtung - durch den Netzknoten - des sekundären Uplink-Trägers im Funkkommunikationsnetz bestimmt ist und wobei das zweite IE dem Netzknoten (130) angibt, dass eine variable TTI-Konfiguration eingerichtet ist.

7. Netzknoten (130) zur Durchführung eines Verfahrens zur Einrichtung eines sekundären Uplink-Trägers, wobei der Netzknoten eine Funkbasisstation ist und wobei der Netzknoten (130) konfiguriert ist, um:
eine Angabe an eine Funknetzsteuerung, RNC, (140) zu senden, wobei die Angabe angibt, dass der Netzknoten ein variables Übertragungszeitintervall, TTI, für den sekundären Uplink-Träger unterstützt;
eine dedizierte Funkverbindungsnachricht von der RNC (140) zu empfangen, wobei die dedizierte Funkverbindungsnachricht ein erstes Informationselement, IE, und ein zweites IE umfasst, wobei das erste IE einen TTI-Wert aus einer Vielzahl von TTI-Werten angibt, die für den sekundären Uplink-Träger verfügbar sind, und wobei das zweite IE dem Netzknoten (130) angibt, dass eine variable TTI-Konfiguration eingerichtet ist; und
den sekundären Uplink-Träger im Funkkommunikationsnetz basierend auf dem TTI-Wert einzurichten, der von dem ersten IE angegeben wird, das in der dedizierten Funkverbindungnachricht umfasst ist.

8. Netzknoten (130) nach Anspruch 7, wobei der Netzknoten (130) konfiguriert ist, um das IE in der dedizierten Funkverbindungsnachricht basierend auf der gesendeten Angabe zu empfangen, so dass der Netzknoten (130) das IE empfängt, wenn angegeben wurde, dass er ein variables TTI unterstützt.

9. Netzknoten (130) nach einem der Ansprüche 7 bis 8, wobei der Netzknoten (130), wenn der Netzknoten das Verfahren basierend auf der empfangenen dedizierten Funkverbindungsnachricht nicht ausführt, ferner konfiguriert ist, um:
in Übereinstimmung mit einem anormalen Zustand zu reagieren, wobei der anormale Zustand ein Versagen des aktuellen sekundären Uplink-Träger-Einrichtungsverfahrens umfasst.

10. Netzknoten (130) nach einem der Ansprüche 7 bis 8, wobei der Netzknoten (130), wenn der Netzknoten das Verfahren basierend auf der empfangenen dedizierten Funkverbindungsnachricht nicht ausführt, ferner konfiguriert ist, um:
in Übereinstimmung mit einem anormalen Zustand zu reagieren, wobei der anormale Zustand die Fortsetzung des sekundären Uplink-Träger-Einrichtungsverfahrens mit einem vordefinierten TTI-Wert umfasst.

## Revendications

1. Procédé, exécuté par un contrôleur de réseau radio, RNC, (140) pour établir une porteuse de liaison montante secondaire, dans lequel le procédé comprend :
la réception (201) d'une indication à partir d'un nœud de réseau (130), dans lequel le nœud de réseau est un une station de base radio, et dans lequel l'indication indique que le nœud de réseau (130) prend en charge un intervalle de temps de transmission variable, TTI, pour la porteuse de liaison montante secondaire ;
la détermination (202) de l'envoi d'un premier élément d'information, IE, dans un message de liaison radio dédié sur la base de l'indication reçue à partir du nœud de réseau (130) ; et
l'envoi (203) du message de liaison radio dédié au nœud de réseau (130), dans lequel le message de liaison radio dédié comprend le premier IE et un second IE, lequel premier IE indique une valeur TTI parmi une pluralité de valeurs TTI disponibles pour le porteuse de liaison montante secondaire,
la valeur TTI indiquée étant pour l'établissement - par le nœud de réseau - de la porteuse de liaison montante secondaire dans le réseau de radiocommunications, et lequel second IE indique au nœud de réseau (130) qu'une configuration TTI variable est établie.

2. Procédé, exécuté par un nœud de réseau (130), pour établir une porteuse de liaison montante secondaire, dans lequel le nœud de réseau est une station de base radio, et dans lequel le procédé comprend :
l'envoi (301) d'une indication à un contrôleur de réseau radio, RNC, (140), dans lequel l'indication indique que le nœud de réseau (130) prend en charge un intervalle de temps de transmission variable, TTI, pour la porteuse de liaison montante secondaire ;
la réception (302) d'un message de liaison radio dédié à partir du RNC (140), dans lequel le message de liaison radio dédié comprend un premier élément d'information, IE, et un second IE, lequel premier IE indique une valeur TTI parmi une pluralité de valeurs TTI disponibles pour la porteuse de liaison montante secondaire et lequel second IE indique au nœud de réseau (130) qu'une configuration TTI variable est établie ; et
l'établissement (303) de la porteuse de liaison montante secondaire dans le réseau de radiocommunications sur la base de la valeur TTI indiquée par le premier IE compris dans le message de liaison radio dédié.

3. Procédé selon la revendication 2, dans lequel le nœud de réseau (130) reçoit le premier IE dans le message de liaison radio dédié sur la base de l'indication envoyée, de sorte que le nœud de réseau (130) reçoit l'IE lorsqu'il a indiqué qu'il prend en charge un TTI variable.

4. Procédé selon l'une quelconque des revendications 2 à 3, dans lequel le procédé lorsque le nœud de réseau (130) ne parvient pas à exécuter la procédure basée sur le message de liaison radio dédié reçu, comprend en outre :
la réaction (304) selon une condition anormale, dans lequel la condition anormale comprend l'échec de la procédure d'établissement de porteuse de liaison montante secondaire actuelle.

5. Procédé selon l'une quelconque des revendications 2 à 3, dans lequel le procédé lorsque le nœud de réseau (130) ne parvient pas à exécuter la procédure basée sur le message de liaison radio dédié reçu, comprend en outre :
la réaction (304) selon une condition anormale, dans lequel la condition anormale comprend la poursuite de la procédure d'établissement de porteuse de liaison montante secondaire avec une valeur TTI prédéfinie.

6. Contrôleur de réseau radio, RNC, (140) pour exécuter un procédé pour établir une porteuse de liaison montante secondaire, dans lequel le RNC (140) est configuré pour :
recevoir une indication à partir d'un nœud de réseau (130), dans lequel le nœud de réseau est une station de base radio, et dans lequel l'indication indique que le nœud de réseau (130) prend en charge un intervalle de temps de transmission variable, TTI, pour la porteuse de liaison montante secondaire ;
déterminer d'envoyer un premier élément d'information, IE, dans un message de liaison radio dédié sur la base de l'indication reçue à partir du nœud de réseau (130) ; et
envoyer le message de liaison radio dédié au nœud de réseau (130), dans lequel le message de liaison radio dédié comprend le premier IE et un second IE, lequel premier IE indique une valeur TTI parmi une pluralité de valeurs TTI disponibles pour la porteuse de liaison montante secondaire, la valeur TTI indiquée étant pour l'établissement - par le nœud de réseau - de la porteuse de liaison montante secondaire dans le réseau de radiocommunications, et lequel second IE indique au nœud de réseau (130) qu'une configuration TTI variable est établie.

7. Nœud de réseau (130), pour exécuter un procédé pour établir une porteuse de liaison montante secondaire, dans lequel le nœud de réseau est une station de base radio, et dans lequel le nœud de réseau (130) est configuré pour :
envoyer une indication à un contrôleur de réseau radio, RNC, (140), dans lequel l'indication indique que le nœud de réseau prend en charge un intervalle de temps de transmission variable, TTI, pour la porteuse de liaison montante secondaire ;
recevoir un message de liaison radio dédié à partir du RNC (140), dans lequel le message de liaison radio dédié comprend un premier élément d'information, IE, et un second IE, lequel premier IE indique une valeur TTI parmi une pluralité de valeurs TTI disponibles pour la porteuse de liaison montante secondaire et lequel second IE indique au nœud de réseau (130) qu'une configuration TTI variable est établie ; et
établir la porteuse de liaison montante secondaire dans le réseau de radiocommunications sur la base de la valeur TTI indiquée par le premier IE compris dans le message de liaison radio dédié.

8. Nœud de réseau (130) selon la revendication 7, dans lequel le nœud de réseau (130) est configuré pour recevoir l'IE dans le message de liaison radio dédié sur la base de l'indication envoyée, de sorte que le nœud de réseau (130) reçoive l'IE lorsqu'il a indiqué qu'il prend en charge un TTI variable.

9. Nœud de réseau (130) selon l'une quelconque des revendications 7 à 8, dans lequel le nœud de réseau (130), lorsque le nœud de réseau ne parvient pas à exécuter la procédure basée sur le message de liaison radio dédié reçu, est en outre configuré pour :
réagir selon une condition anormale, dans lequel la condition anormale comprend l'échec de la procédure actuelle d'établissement de porteuse de liaison montante secondaire.

10. Nœud de réseau (130) selon l'une quelconque des revendications 7 à 8, dans lequel le nœud de réseau (130), lorsque le nœud de réseau ne parvient pas à exécuter la procédure basée sur le message de liaison radio dédié reçu, est en outre configuré pour :
réagir selon une condition anormale, dans lequel la condition anormale comprend la poursuite de la procédure d'établissement de porteuse de liaison montante secondaire avec une valeur TTI prédéfinie.
